# EUROPEAN PATENT APPLICATION

(11) **EP 3 239 698 A1**
(43) Date of publication of application: **01.11.2017**
(21) Application number: 16167137.5
(22) Date of filing: 26.04.2016
(51) Int. Cl.: G01N 23/04

(54) **HIGH PRECISION COMPUTED TOMOGRAPHY FOR METROLOGY**

(71) Applicant: Danmarks Tekniske Universitet, 2800 Kgs. Lyngby (DK)
(72) Inventor: Gundlach, Carsten, 2630 Taastrup (DK); Poulsen, Henning Friis, 4000 Roskilde (DK)
(74) Representative: Awapatent A/S

(57) **Abstract**

Disclosed is a CT system for performing measurements on an object. The CT system comprises a support element for supporting the object; a radiation source for radiating the object at a plurality of different angles; a radiation detector assembly for detecting radiation passed through the object and in response thereto generate radiation data; and a processing unit operatively connected to the radiation detector assembly. The radiation detector assembly comprises a support, a first detector array, and a second detector array, the first detector array and the second detector array being attached to the support. The processing is configured to generate tomographic images of the object by processing radiation data received from the radiation detector assembly together with first calibration data describing properties of the first detector array and second calibration data describing properties of the second detector array.

## Description

### Field

The present invention relates to a Computed tomography system for performing measurements on an object and to a method of using such a system.

### Background

Measurements of the spatial (x, y, z) position of a plurality of internal and/or external points of objects is a central task in the production industry. The measurements are performed to secure that the machines, tools, and finished products are all within the required level of tolerance. Precision and speed are two of the most important characteristics of a measuring system.

Computed tomography (CT) has become an important tool for measuring objects. The objects are radiated with x-rays from an x-ray source at a plurality of angles, and the attenuated radiation that has passed through the object is measured using an X-ray detector array. The output from the X-ray detector array is processed by a processing unit to create 3D tomographic images used for the measurements. CT is a fast technique but for an object of a fixed size the spatial resolution is bound by the number of pixels in the X-ray detector array. Making large X-ray detector arrays is however difficult and expensive.

US5119408 discloses a method for inspecting a component having dimensions larger than a fan beam angle of an x-ray inspection system. The method includes the steps of: providing an x-ray beam having a selected fan angle in a source focal point; positioning a portion of the component substantially completely within the x-ray beam; rotating the component 360 degrees around a component inspection rotational axis; collecting the attenuated x-ray beam that passes through the component during rotation; generating a multiplicity of electrical signals responsive to the collected x-ray beam; incrementally moving the component inspection rotational axis about the x-ray source focal point to position another portion of the component within the x-ray beam; and repeating the steps of rotating the part 360 degrees about a component inspection rotational axis and incrementally moving the part inspection rotational axis about the x-ray source focal point until the entire component has passed through the fan beam.

It is however a problem with the above mentioned method that the total time required to perform a 3D measurement of the entire object is significantly increased as a full 360 degrees CT scan needs to be performed each time the part is moved.

Thus, it remains a problem to provide a method / system for performing spatial (x,y,z) measurements on an object, which simultaneously is fast and exhibits a high spatial accuracy.

### Summary

According to a first aspect, the invention relates to a CT system for performing spatial measurements on an object comprising:
- a support element for supporting the object;
- a radiation source for radiating the object at a plurality of different angles;
- a radiation detector assembly for detecting radiation passed through the object and in response thereto generate radiation data; and
- a processing unit operatively connected to the radiation detector assembly;
wherein the radiation detector assembly comprises a support, a first detector array, and a second detector array, the first detector array and the second detector array being attached to said support; and said processing unit being configured to generate tomographic images of the object by processing radiation data received from the radiation detector assembly together with first calibration data describing properties of the first detector array and second calibration data describing properties of the second detector array.

Consequently, by using a radiation detector assembly comprising a plurality of individual detector arrays a fast high precision CT system for performing spatial measurements is provided. The use of a plurality of detector arrays enables "large" objects to be scanned without translating the objects after a 360 degrees scan or changing the scan geometry by increasing the distance between the radiation source and the radiation detectors. Translation of the objects would results in a significant increase in the scan time as explained previously and changing the scan geometry would result in a decreases spatial resolution as each pixel in the radiation detector would cover a larger part of the object. Furthermore, by using first and second calibration data misalignments between the individual detector arrays may be compensated for.

The CT system may comprise a movable radiation source and radiation detector assembly, i.e. the radiation source and the radiation detector assembly may be configured to revolve around the support element, whereby the object may be radiated at a plurality of angles. Alternatively, the support element may be configured to rotate the object around a central axis whereby the object may be radiated at a plurality of angles. The radiation source is preferably an X-ray radiation source. Correspondingly, the detector arrays are preferably X-ray detector arrays. The detector arrays may have a rectangular shape comprising MXN pixels or as a special case have a square shape and comprise NxN pixels, e.g. the detector arrays may comprise 2024x2024 pixels or 4048x4048 pixels. The detector arrays may be attached to the support in any manner e.g. the detector arrays may be adhered to the support using and adhesive or the support may have fixtures configured to grip the detector arrays. The support may be a planar support. The first detector array may abut the second detector array. Spatial measurement may be performed on the generated tomographic images e.g. by determining the position of a plurality of internal and/or external points of the object in the tomographic images.

The radiation detector assembly may comprise more than two detector arrays. The radiation detector assembly may comprise at least four detector arrays arranged in a 2x2 matrix and the processing unit may be configured to generate tomographic images of the object by processing radiation data received from the radiation detector assembly together with calibration data for each of the four detector arrays. The radiation detector assembly may comprise at least nine detector arrays arranged in a 3x3 matrix and the processing unit may be configured to generate tomographic images of the object by processing radiation data received from the radiation detector assembly together with calibration data for each of the four detector arrays. The radiation detector assembly may comprise at least sixteen detector arrays arranged in a 4x4 matrix and the processing unit may be configured to generate tomographic images of the object by processing radiation data received from the radiation detector assembly together with calibration data for each of the sixteen detector arrays. The radiation detector assembly may comprise in total at least 5000, 7000, or 10 000 pixels along a first axis. The radiation detector assembly may comprise in total at least 5000, 7000, or 10000 pixels along a first axis, and at least 5000, 7000, or 10000 pixels along a second axis, wherein the second axis is perpendicular to the fist axis. The system may further comprise a memory unit, wherein the first calibration data and the second calibration data are stored on the memory unit. The processing unit may generate the tomographic images using any reconstruction algorithm such as the filtered back projection algorithm or derivates of this, algebraic reconstructions algorithms such as ART, SART, and SIRT, discrete tomography algorithms, optimization algorithms, and algorithms using iterative physical model-based maximum likelihood expectation maximization techniques. A priori knowledge of the shape of the object may be used in the reconstruction.

In some embodiments, the first calibration data comprises data indicative of the spatial location the first detector array and the second calibration data comprises data indicative of the spatial location of the second detector array.

Consequently, the system may compensate for any spatial offset between the detector arrays.

The data indicative of the spatial location may be data specifying the spatial location of the centre of the detector arrays or the spatial location of another part of the detector arrays.

In some embodiments, the first calibration data comprises data indicative of the orientation of the first detector array and the second calibration data comprises data indicative of the orientation of the second detector array.

Consequently, the system may compensate for any rotation of the detector arrays.

In some embodiments, the support element is rotatably arranged relative to the radiation sources and the radiation detector assembly.

Consequently, the radiation detector assembly may be kept stationary thereby limiting any movement of the individual detector arrays.

In some embodiments, the processing unit is configured to obtain the first calibration data and the second calibration data by processing radiation data received from the radiation detector assembly originating from scanning a reference object.

The reference object may comprise one or more spatial markers and the processing unit may be configured to detect the one or more spatial markers in the radiation data for a plurality of different angles and use that information to derive the first calibration data and the second calibration data.

In some embodiments, the support element comprises the reference object.

In some embodiments, the processing unit is configured to firstly generate the first calibration data and the second calibration data by processing first radiation data, and secondly generate tomographic images of the object by processing the first radiation data together with the first calibration data and the second calibration data.

Consequently, the calibration data may be generated simultaneously with an object is being scanned. This improves the speed of the method as there no longer is a need of a separate calibration step before an object can be analyzed. Furthermore, the precision may be improved as it can be secured that the first calibration data and the second calibration data is completely updated.

The system may comprise a memory unit operatively connected to the radiation detector assembly and the processing unit, wherein the memory unit is configured to store un-processed radiation data for a plurality of different angels, and wherein the processing unit is configured to receive the un-processed radiation data from the memory unit after it has generated the first calibration data and the second calibration data.

According to a second aspect, the invention relates to a method for performing spatial measurements on an object using a CT system, the CT system comprising: a support element for supporting the object; a radiation source for radiating the object; a radiation detector assembly for detecting radiation passed through the object; and a processing unit operatively connected to the radiation detector assembly, wherein the radiation detector assembly comprises a support, a first detector array, and a second detector array, the first detector array and the second detector array being attached to the support, the method comprising the steps of:
- arranging the object at a plurality of angles with respect to the radiation source and the radiation detector assembly and radiating the object at each of the plurality of angles using the radiation source thereby generating radiation data using the radiation detector assembly;
- generating tomographic images of the object by processing using the processing unit, the radiation data together with first calibration data describing properties of the first detector array and second calibration data describing properties of the second detector array; and
- analyzing the tomographic images to measure parts of the object.

Consequently, by using a radiation detector assembly comprising a plurality of individual detector arrays a fast high precision CT system for performing measurements is provided. Furthermore, by using first and second calibration data misalignments between the individual detector arrays may be compensated for.

The tomographic images may be analyzed automatically using computational image analysis or manually by a human operator.

In some embodiments, the first calibration data comprises data indicative of the spatial location of the first detector array and the second calibration data comprises data indicative of the spatial location of the second detector array.

In some embodiments, the first calibration data comprises data indicative of the orientation of the first detector array and the second calibration data comprises data indicative of the orientation of the second detector array.

In some embodiments, the support element is rotatably arranged relative to the radiation source and the radiation detector assembly and the object is arranged at the plurality of angles by rotating it using the support element.

In some embodiments, the processing unit is configured to obtain the first calibration data and the second calibration data by processing data from the radiation detector assembly originating from scanning a reference object.

In some embodiments, the support element comprises the reference object.

In some embodiments, the processing unit firstly generate the first calibration data and the second calibration data by processing the radiation data, and secondly generate tomographic images of the object by processing the radiation data together with the first calibration data and the second calibration data.

The different aspects of the present invention can be implemented in different ways including as a CT system for performing measurements on an object, and a method for performing measurements on a object using a CT system described above and in the following, each yielding one or more of the benefits and advantages described in connection with at least one of the aspects described above, and each having one or more preferred embodiments corresponding to the preferred embodiments described in connection with at least one of the aspects described above and/or disclosed in the dependant claims. Furthermore, it will be appreciated that embodiments described in connection with one of the aspects described herein may equally be applied to the other aspects. Furthermore, it will be appreciated that embodiments described in connection with one of the aspects described herein may equally be applied to the other aspects.

### Brief description of the drawings

The above and/or additional objects, features and advantages of the present invention, will be further elucidated by the following illustrative and nonlimiting detailed description of embodiments of the present invention, with reference to the appended drawings, wherein:
Fig. 1 shows a schematic drawing of a CT system according to an embodiment of the present invention.
Fig. 2a shows a schematic drawing of a radiation detector assembly according to an embodiment of the present invention.

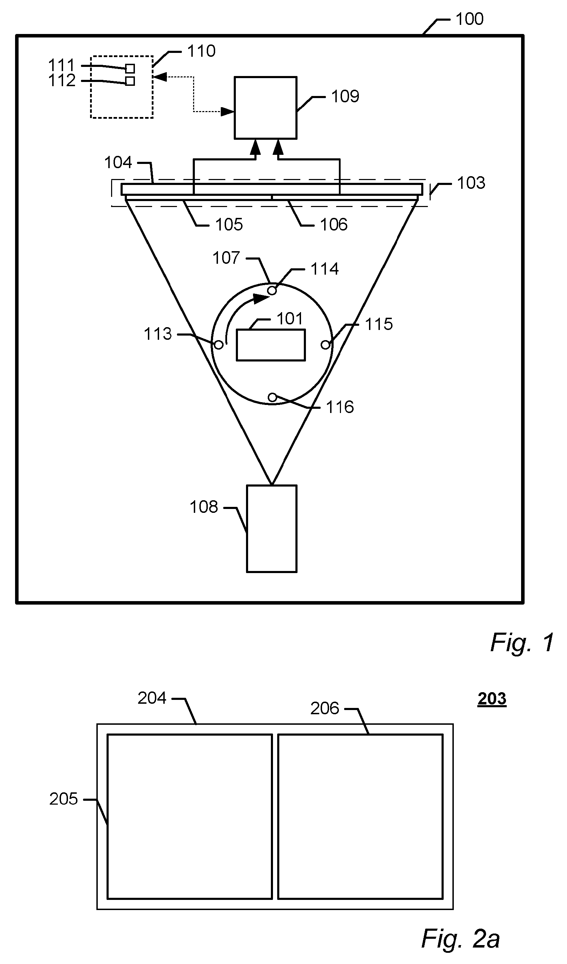

Fig. 2a shows a schematic drawing of a radiation detector assembly according to an embodiment of the present invention.

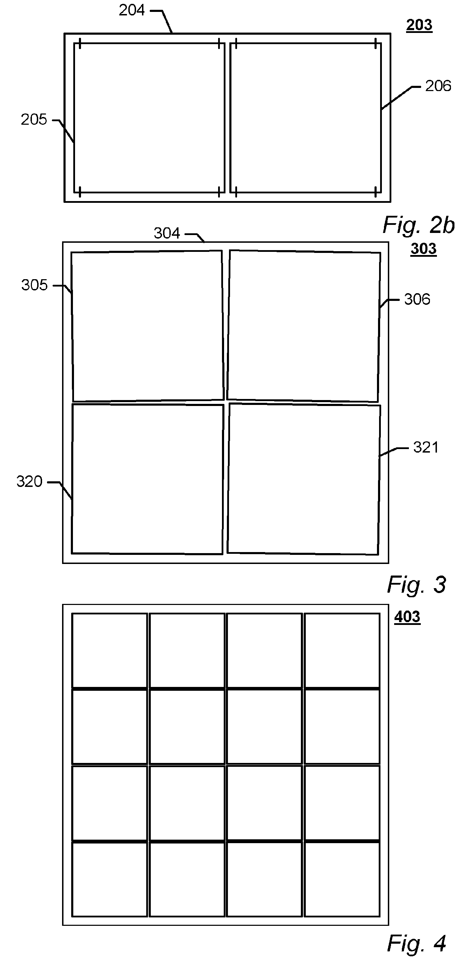

Fig. 3 shows a schematic drawing of a radiation detector assembly comprising four detector arrays according to an embodiment of the present invention.
Fig. 4 shows a schematic drawing of a radiation detector assembly comprising sixteen detector arrays according to an embodiment of the present invention.

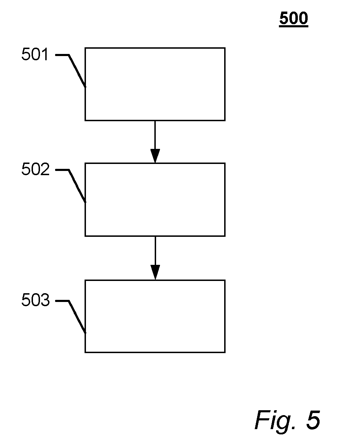

Fig. 5 shows a flow chart for a method according to an embodiment of the present invention.

### Detailed description

In the following description, reference is made to the accompanying figures, which show by way of illustration how the invention may be practiced.

Fig. 1 shows a schematic drawing of a CT system 100 for performing spatial measurement on an object 101 according to an embodiment of the invention. The CT system 100 is shown from the top. The CT system 100 comprises a support 107 for supporting the object 101, a radiation source 108 for radiating the object at a plurality of different angles, a radiation detector assembly 103 for detecting radiation passed through the object 101 and in response thereto generate radiation data, and a processing unit 109 operatively connected to the radiation detector assembly 103. The radiation detector assembly 103 comprises a support 104, a first detector array 105, and a second detector array 106. The first detector array 105 and the second detector array 106 are attached to the support 104. The support element 107 is configured to rotate the object 101 around a central axis whereby the object 101 may be radiated at a plurality of different angles, i.e. for each angle the radiation source 108 radiate the object 101 and the radiation detector assembly 103 measures the attenuated radiation that has passed through the object. The resulting radiation data generated by the radiation detector assembly 103 is processed by the processing unit 109 together with first calibration data 111 describing properties of the first detector array 105 and second calibration data 112 describing properties of the second detector array 106 to generate tomographic images of the object. Consequently, by using first and second calibration data 111 112 there may be compensated for a misalignment between the first detector array 105 and the second detector array 106 and / or a rotation of the first detector array 105 or the second detector array 106. The support 107 may optionally comprise a reference object 113-116. In this embodiment, the reference object comprises four spatial markers 113-116. The processing unit 109 may be configured to obtain / generate the first calibration data 111 and the second calibration data 112 by processing radiation data received from the radiation detector assembly 103 originating from scanning the reference object 113-116. This may be done by examining how the 'shadows' of the individual spatial markers 113-116 'propagates' over the detector arrays 105 106 when the support 107 is rotated.

The CT system 100 may be configured to scan the reference object 113-116 and the object 101 at the same time e.g. the processing unit 109 may be configured to firstly generate the first calibration data 111 and the second calibration data 112 by processing first radiation data received from the radiation detector assembly 103, and secondly generate tomographic images of the object by processing the same first radiation data again but this time together with the newly generated first calibration data 111 and the second calibration data 112. This may improve the speed as there is no need for a separate calibration step, and furthermore secure that the first calibration data 111 and the second calibration data 112 is completely updated thereby improving the precision. The memory unit 110 may be configured to store un-processed radiation data generated by the radiation detector assembly 103 until the processing unit has generated the first calibration data 111 and the second calibration data 112.

Fig. 2a shows a schematic drawing of a radiation detector assembly 203 according to an embodiment of the present invention. The radiation detector assembly 203 is shown from the front. The radiation detector assembly 203 comprises a support 204, a first detector array 205 and a second detector array 206 both attached to the support 204. The first detector array 205 and the second detector array 206 are in this embodiment adhered to the support 204.

Fig. 2b shows a schematic drawing of a radiation detector assembly 203 according to an embodiment of the present invention. The radiation detector assembly 203 is shown from the front. The radiation detector assembly comprises a support 204, a first detector array 205 and a second detector array 206 both attached to the support 204. The support 204 comprises two fixtures, a first fixture configured to grip the first detector array 205 and attach the first detector array 205 to the support 204 and a second fixture configured to grip the second detector array 206 and attach the second detector array 206 to the support 204.

Fig. 3 shows a schematic drawing of a radiation detector assembly 303 according to an embodiment of the present invention. The radiation detector assembly 303 is shown from the front. The radiation detector assembly 303 comprises a support 304, a first detector array 305, a second detector array 306, a third detector array 320, and a fourth detector array 321 all attached to the support 304. The four detector arrays 305 306 320 321 are arranged in a 2x2 matrix. Fig. 3 further illustrates how the individual detector arrays may be slightly rotated and or displaced.

Fig. 4 shows a schematic drawing of a radiation detector assembly 403 according to an embodiment of the present invention. The radiation detector assembly 403 is shown from the front. The radiation detector assembly 403 comprises a support and sixteen detector arrays arranged in an 4x4 matrix.

Fig. 5 shows a flow chart for a method for performing measurements on an object using a CT system according to an embodiment of the present invention. The CT system may be a CT system similar to the CT system disclosed in relation to Fig. 1, i.e. the CT system may comprise: a support element for supporting the object; a radiation source for radiating the object; a radiation detector assembly for detecting radiation passed through the object; and a processing unit operatively connected to the radiation detector assembly. The radiation detector assembly comprises a support, a first detector array, and a second detector array, the first detector array and the second detector array being attached to the support. The method start in step 101 with arranging the object at a plurality of angles with respect to the radiation source and the radiation detector assembly and radiating the object at each of the plurality of angles using the radiation source thereby generating radiation data using the radiation detector assembly. Next, in step 102, tomographic images of the object is generated by processing, using the processing unit, the radiation data together with first calibration data describing properties of the first detector array and second calibration data describing properties of the second detector array. Finally, in step 103 parts of the object are measured by analyzing the generated tomographic images.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A CT system for performing spatial measurements on an object comprising:
• a support element for supporting the object;
• a radiation source for radiating the object at a plurality of different angles;
• a radiation detector assembly for detecting radiation passed through the object and in response thereto generate radiation data; and
• a processing unit operatively connected to the radiation detector assembly;
wherein the radiation detector assembly comprises a support, a first detector array, and a second detector array, the first detector array and the second detector array being attached to said support; and said processing unit being configured to generate tomographic images of the object by processing radiation data received from the radiation detector assembly together with first calibration data describing properties of the first detector array and second calibration data describing properties of the second detector array.

2. A CT system according to claim 1, wherein the first calibration data comprises data indicative of the spatial location the first detector array and the second calibration data comprises data indicative of the spatial location of the second detector array.

3. A CT system according to claim 2, wherein the first calibration data comprises data indicative of the orientation of the first detector array and the second calibration data comprises data indicative of the orientation of the second detector array.

4. A CT system according to any one claims 1 to 3, wherein the support element is rotatably arranged relative to the radiation sources and the radiation detector assembly.

5. A CT system according to any one of claims 1 to 4, wherein the processing unit is configured to obtain the first calibration data and the second calibration data by processing radiation data received from the radiation detector assembly originating from scanning a reference object.

6. A CT system according to claim 5, wherein the support element comprises the reference object.

7. A CT system according to claim 6, wherein the processing unit is configured to firstly generate the first calibration data and the second calibration data by processing first radiation data, and secondly generate tomographic images of the object by processing the first radiation data together with the first calibration data and the second calibration data.

8. A method for performing spatial measurements on an object using a CT system, the CT system comprising: a support element for supporting the object; a radiation source for radiating the object; a radiation detector assembly for detecting radiation passed through the object; and a processing unit operatively connected to the radiation detector assembly, wherein the radiation detector assembly comprises a support, a first detector array, and a second detector array, the first detector array and the second detector array being attached to the support, the method comprising the steps of:
• arranging the object at a plurality of angles with respect to the radiation source and the radiation detector assembly and radiating the object at each of the plurality of angles using the radiation source thereby generating radiation data using the radiation detector assembly;
• generating tomographic images of the object by processing using the processing unit, the radiation data together with first calibration data describing properties of the first detector array and second calibration data describing properties of the second detector array; and
• analyzing the tomographic images to measure parts of the object.

9. Method a method according to claim 8, wherein the first calibration data comprises data indicative of the spatial location of the first detector array and the second calibration data comprises data indicative of the spatial location of the second detector array.

10. A method according to claim 9, wherein the first calibration data comprises data indicative of the orientation of the first detector array and the second calibration data comprises data indicative of the orientation of the second detector array.

11. A method according to any one claims 8 to 10, wherein the support element is rotatably arranged relative to the radiation source and the radiation detector assembly and the object is arranged at the plurality of angles by rotating it using the support element.

12. A method according to any one of claims 8 to 11, wherein the processing unit is configured to obtain the first calibration data and the second calibration data by processing data from the radiation detector assembly originating from scanning a reference object.

13. A method according to claim 12, wherein the support element comprises the reference object.

14. A method according to claim 12, wherein the processing unit firstly generate the first calibration data and the second calibration data by processing the radiation data, and secondly generate tomographic images of the object by processing the radiation data together with the first calibration data and the second calibration data.
